# EUROPEAN PATENT APPLICATION

(11) **EP 2 204 433 A1**
(43) Date of publication of application: **07.07.2010**
(21) Application number: 08173085.5
(22) Date of filing: 30.12.2008
(51) Int. Cl.: C10L 1/02, C10L 1/32

(54) **Ethanol-based fuel for compression engines**

(71) Applicant: SEKAB BioFuels & Chemicals AB, 891 26 Örnsköldsvik (SE)
(72) Inventor: Löfvenberg, Urban, SE-444 45, STENUNGSUND (SE); Östensson, Bengt, 254 40 HELSINGBORG (SE)
(74) Representative: Presland, Torbjörn

(57) **Abstract**

The present invention provides a fuel for a compression engine comprising a major amount of an ethanol liquid and minor amounts of an ignition improver and a viscosity increasing agent, wherein the viscosity of the fuel is 1.6 - 4.5 cSt at 40 °C and the ignition improver and the viscosity increasing agent are the same or different. Further, there is provided a use of the fuel, a use of a chemical compound as a viscosity increasing agent and a method a producing an ethanol-based fuel.

## Description

### Field of the present disclosure

The present disclosure generally relates to the field of ethanol-based fuels. More particularly it relates to fuels suitable for compression engines.

### Background

Global warming, petroleum depletion and energy security have been the main driving forces for the development of renewable fuels that can replace the petroleum-derived fuels, such as gasoline and diesel. Ethanol is currently a commonly used renewable automobile fuel. It is largely produced by fermentation of sugar- or starch-containing feed stocks, such as cane sugar, corn and wheat. Also, it may be produced from lignocellulose, which is a more abundant raw material. Other benefits of lignocellulose are that it is not considered a human food resource and that ethanol may be produced from it with a relatively high net energy gain and a high renewable CO₂-efficiency, i.e. the amount of fossil-derived CO₂ generated throughout the production chain when producing ethanol from lignocellulose is comparatively low.

The use of ethanol in compression engines has sometimes been associated with problems. To meet those, various ethanol-based fuels that are adapted for such use have been developed over the past years.

For example, the problem related to the ignition properties of aqueous ethanol has been addressed in a number of patent applications. In WO 95/05437 an aqueous ethanol fuel containing an ignition improver of a certain class is described.

In GB 2143846, the addition of small amounts of a polyglycol fluid to a diesel fuel based on methanol and/or ethanol for lubricating purposes is devised.

### Summary

It is a general object of the present disclosure to provide an ethanol-based fuel and the use and production of such. Further, it is an object of some aspects of the present disclosure to provide for reduced formation of sticky coatings in compression engines running on ethanol-based fuels. The present invention is defined by the appending claims.

Thus, as a first aspect of the present disclosure, there is provided a fuel for a compression engine comprising a major amount of an ethanol liquid and minor amounts of an ignition improver and a viscosity increasing agent, wherein the viscosity of the fuel is1.6 - 4.5 cSt at 40 °C and the ignition improver and the viscosity increasing agent are the same or different.

As a second aspect of the present disclosure, there is provided a use of the fuel according to the first aspect for running a compression engine.

As a third aspect of the present disclosure, there is provided a use of a chemical compound having a molecular weight of 100-10000 and comprising a polymeric moiety as a viscosity increasing agent in an ethanol based fuel.

As a fourth aspect of the present disclosure, there is provided a method of producing an ethanol based fuel for a compression engine, comprising the step of:
a) providing an ethanol based solution and
b) adding a viscosity increasing agent to said ethanol based solution to obtain said ethanol based fuel, wherein the viscosity of the ethanol based fuel at 40 °C is at least 10 % higher than that of the ethanol based solution.

### Brief description of the figures

Fig 1 is a section view of part of a fuel injector pump 1. A piston 2 is arranged in a cylinder bore 5, which is connected to a fuel return 6, at which sticky coatings 10 are formed. A fuel channel 11 connects a fuel inlet (not shown) with the cylinder bore 5 and a nozzle 7. The nozzle 7 has a cylinder bore 9 in which a needle piston 8 connected to a spring is arranged.

A slit 3 is present between the circumferential surface 4 of the piston 2 and the surface of the cylinder bore 5.

Fig 2 is an enlarged section view of the piston 2 and its circumferential surface 4, the slit 3, the surface of the bore 5 and the fuel return. Further, sticky coatings 10 formed inside the fuel return are shown.

Fig 3 is an enlarged view of the nozzle 7 and its needle piston 8 and cylinder bore 9. Further, sticky coatings 10 formed inside the cylinder bore 9 of the nozzle are shown.

### Detailed description

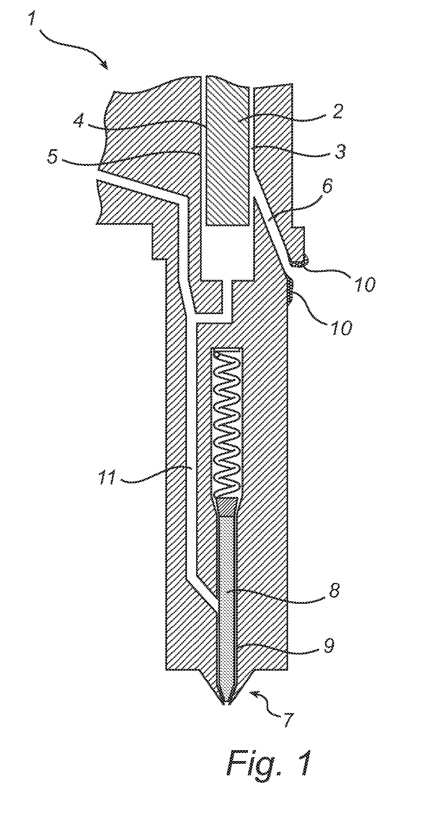

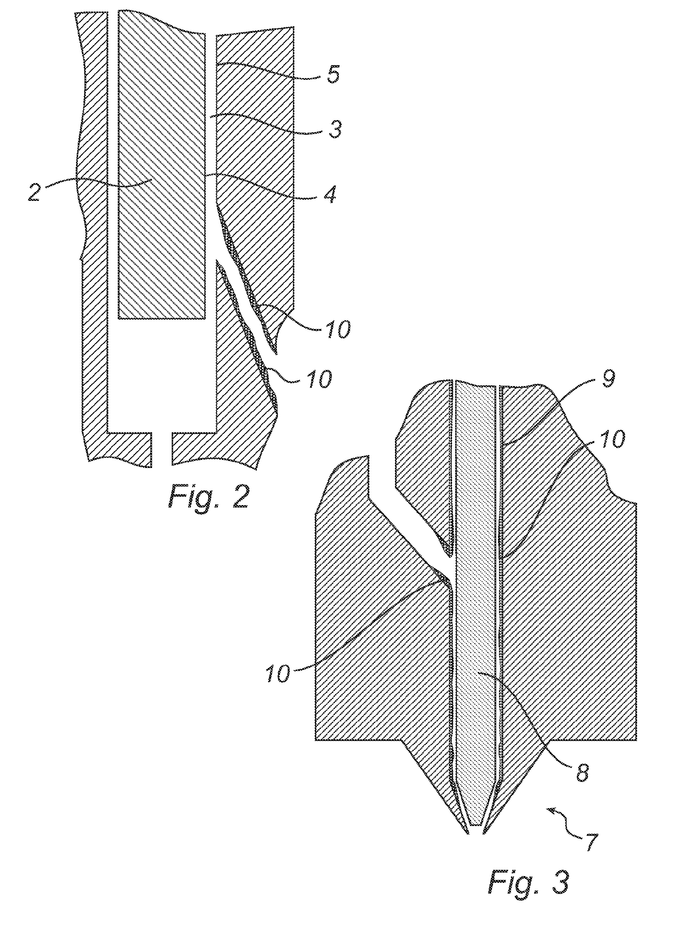

In the following it is referred to Fig 1-3, which are non-limiting illustrations of a fuel injector pump and selected parts thereof. The skilled person understands that the reasoning below applies *mutatis mutandis* to other designs of fuel injector pumps for compression engines.

"Compression engine" refers to an internal combustion engine using compression ignition to burn the fuel. Diesel engines are examples of internal compression engines.

In compression engines running on some ethanol-based fuels, an increased wear of the piston 2 of the fuel injector pump 1 as compared to engines running on diesel have been observed. Accordingly, increased incidents of seizure in the injector pump were experienced in the compression engines running on the ethanol-based fuels.

In order to prevent the wear problem, the clearance 3 between the circumferential surface 4 of the piston 2 and the surface of the cylinder bore 5 was increased, which allowed for more lubricating motor oil to enter the clearance 3. Such increase of the clearance 3 decreased piston wear and the number of seizures, but created instead another problem; the formation of sticky coatings 10. The sticky coatings 10 have primarily been found at the fuel return 6 and in the nozzle 7. The fuel return 6 is a channel through which excess fuel from the injector pump 1 is returned to the fuel tank. Incidents where the formation of sticky coatings 10 had gone so far that the needle piston 8 got stuck in its cylinder bore 9 in the nozzle have been observed.

The sticky coatings 10 may be of various consistencies and degrees of stickiness, and generally, the chemical compositions of the sticky coatings are complex.

The sticky coatings impair the performance of the injector pump and in some cases other parts of the engine and entail an increased need of maintenance.

Without being bound to any specific scientific theory, the inventors believe that the sticky coatings may be formed when the motor oil mixes with the ethanol-based fuel under high temperatures and pressures. Accordingly, they suspect that the increased clearance 3 allows for more mixing of the motor oil and the ethanol-based fuel.

In conclusion, the compression engines, and in particular the fuel injector pumps, running on ethanol-based fuels have generally been susceptible of more wear and/or required more maintenance than those running on diesel.

The inventors have realized that the difference in wear, required maintenance and sticky coatings formation is at least partly due to the fact that the viscosity of ethanol-based fuels is lower than that of diesel.

Without being limited to any specific theory, the inventors believe that fuels of lower viscosity allow for more radial movements of the piston 2 in the cylinder bore 5. A higher viscosity is believed to increase the load bearing capacity of the fuel film in the clearance 3. Accordingly, fuels of higher viscosity may have a better capability of stabilizing the piston 2 in the cylinder bore 5. Consequently, if the viscosity is increased, the injector pump construction may be modified such that the clearance 3 may be reduced without experiencing a return of the wear and seizure problem. In turn, a reduced clearance 3 would prevent the formation of sticky coatings. A more stabile motion of the piston 2 in combination with the improved film properties of the fuel may also decrease the mixing of fuel and motor oil without a clearance 3 reduction.

Further, a higher viscosity is believed to provide for a lubricating film which has an improved resistance to shearing strains or forces. Such an improvement may allow for a selection of a motor oil which mixes with the ethanol-based fuel to a lesser extent than those required earlier. Thus, such adaptations may also result in reduced formation of sticky coatings.

As a first aspect of the present disclosure, there is provided a fuel for a compression engine comprising a major amount of an ethanol liquid and minor amounts of an ignition improver and a viscosity increasing agent, wherein the viscosity of the fuel is 1.6 - 4.5 cSt at 40 °C and the ignition improver and the viscosity increasing agent are the same or different.

The amount of ethanol liquid being "major" and the amounts of ignition improver and viscosity increasing agent being "minor" refer to that the amount of ethanol liquid is larger, by weight, than the amount of ignition improver or viscosity increasing agent.

In the context of the present disclosure, "ethanol liquid" refers to a liquid containing ethanol and optionally water. Thus, the ethanol liquid according to the present invention may for example be hydrous, i.e. azeotropic ethanol comprising about 4 % water by weight, or anhydrous, i.e. containing 1 % or less water by weight. Further, the ethanol liquid may comprise smaller amounts of other components derived from the production process of the ethanol liquid. Normally, such a process comprises fermentation of a sugar-containing aqueous liquid, subsequent distillation and optionally further drying of the obtained ethanol liquid. However, there are also other ethanol producing processes, such as hydration of ethylene.

For ethanol, the resistance to self ignition under compression is relatively high. Consequently a traditional compression engine does not run well on pure ethanol. Therefore, an ignition improver is added. In the context of the present disclosure, an "ignition improver" refers to an agent which improves the ignition properties of a fuel into which it has been blended. Thus, the ignition improver of the present disclosure improves the ignition properties of an ethanol-based fuel. In the context of the present disclosure, the ignition improver is one or more agents having such ignition improving properties. An example of an ignition improver for an ethanol-based fuel is provided in WO 95/05437, which is incorporated herein by reference. Thus, the ignition improver may be a water soluble adduct of a polyol having 3-10, preferably 3-6 hydroxyl groups and ethylene oxide and/or propylene oxide, wherein the molecular weight of the adduct is 350 to 10000, preferably 450 to 5000. Such an adduct may also be ethanol soluble. Further, the ignition improver may for example be the adduct according to any one of claims 2-5 in WO 95/05437.

Some ignition improvers also increase the viscosity when added to an ethanol liquid, sometimes substantially. Therefore, the ignition improver and the viscosity increasing agent of the present disclosure may be the same or different.

The absolute viscosity values presented in the present disclosure refer to kinematic viscosity values which may be obtained by the standard method ASTM D7042-04. The kinematic viscosity may be expressed in centistokes (cSt) or mm²*s⁻¹_{.}

Further, in the context of the present disclosure, a "viscosity increasing agent" refers to an additive which increases the viscosity of the liquid into which it has been blended. Thus, the viscosity increasing agent of the present disclosure increases the viscosity of an ethanol-based fuel.

The inventors have noted that the viscosity of anhydrous ethanol is lower that that of hydrous ethanol (see also table 1). Accordingly, the inventors have realized that the need for increasing the viscosity of fuels based on ethanol liquids of lower water content is even more apparent.

Further, high water content reduces the energy content of the fuel, and therefore, lower water content may be beneficial.

Thus, in embodiments of the first aspect, the ethanol liquid contains less than 1.5 % water by weight, such as less than 1.0 % water by weight, such that less than 0.5 % water by weight.

The viscosities of the commercial diesel fuels Diesel MK1 (Swedish diesel) and EN590 (European diesel) are typically 1.9 cSt and 2.1 cSt at 40°C, respectively. The inventors reason that it may be beneficail to adopt a viscosty which is not much lower than that of the commericial diesel fuels. Further, a viscosity which is much higher than that of the commercial diesel fuels may impair the fuel flow in the compression engine. According to diesel standards, the viscosity should normally not be higher than about 4 cSt.

Thus, in embodiments of the first aspect, the viscosity of the fuel at 40°C is 1.8 - 4.0 cSt, such as 1.9 - 4.0 cSt, such as 1.9 - 3.5 cSt, such as 1.9 - 3.0 cSt.

In general, compression engines are believed to run better on fuels which are one-phase systems.

Thus, in embodiments of the first aspect, the viscosity increasing agent does not form an emulsion in the ethanol liquid. That is, the viscosity increasing agent is soluble in the ethanol liquid. Further, in related embodiments of the first aspect, the fuel is a solution.

Using agents having polymeric structures is one way of increasing the viscosity of the ethanol-based. The viscosity increasing effect of polymers generally increases with their molecular weight. However, if the molecular weight is too high, the viscosity increasing agent may clog the fuel filter.

Thus, in embodiments of the first aspect, the viscosity increasing agent comprises a polymeric moiety. For example, the viscosity increasing agent of such embodiments may have a molecular weight of has a molecular weight of 100-10000, such as 450-10000. As other examples, the molecular weight may be 1000-10000, such as 2000-10000, in such embodiments.

Consequently, the viscosity increasing agent according to such embodiments may for example comprise a polymeric moiety and a non-polymeric moiety. For example, it may be polyethylene glycol.

Combustibility is an aspect of the selection of a viscosity increasing agent. Polymers comprising oxygen generally have favorable combustion properties combined with sufficient solubility in polar solvents, such as ethanol. The polymeric moiety may thus comprise one or more, such as at least three, oxygen-containing groups. Each of such oxygen-containing group may independently be selected from an alcohol, aldehyde, amide or carboxylic acid. Further, the polymeric moiety may for example comprise an oxygen-containing repeating unit. Such repeating unit may be the only repeating unit of the polymeric moiety, one of two or more repeating units in the case wherein the polymeric moiety is a co-polymer or stochastically distributed along the polymeric moiety. For example, the repeating unit may comprise an ether, an ester or a hydroxyl group. In alternative or complementary embodiments, the viscosity increasing agent may comprise other polar groups, such as amines, which may also increase the solubility in the polar solvent (fuel).

In embodiments of the first aspect, the ash content of the viscosity increasing agent is lower than 0.3 % by weight, such as lower than 0.1 % by weight. This is to minimize deposits in the cylinders of the compression engine and/or in the exhaust catalytic converter.

Further, in embodiments of the first aspect, the chloride content of the fuel is 40 ppm or less. The chloride content may for example by measured using the standard method ASTM D7328.

The required amount of viscosity increasing agent depends on the type of viscosity increasing agent. It is within the capabilities of the man skilled in the art to select a viscosity increasing agent and find the amount of it required to reach a given viscosity or viscosity range. Anyhow, a sufficient increase of the viscosity typically requires a significant amount of the viscosity increasing agent.

Thus, in embodiments of the first aspect, the concentration of the viscosity increasing agent is higher than 0.05 % by weight, such as higher than 0.1 % by weight.

Partly due to costs and/or combustion characteristics, it may be advantageous if the viscosity increasing agent concentration is not too high. Consequently, in embodiments of the first aspect, the concentration of the viscosity increasing agent is 10 % or lower by weight, such as higher than 5 % or lower by weight.

Further, in embodiments of the first aspect, the ignition improver content is 1-10 % by weight.

Ethanol is a relatively cheap fuel component and it may be derived from renewable sources. Consequently, high ethanol content may be beneficial.

Thus, in embodiments of the first aspect, the ethanol liquid content is 50 - 99 % by weight, such as 75 - 99 % by weight, such as 80 - 99 % by weight, such as 80 - 99 % by weight, such as 85 - 99 % by weight, such as 90 - 99 % by weight.

To prevent drinking of the fuel, one or more denaturing agents may be added to the fuel of the first aspect. For example, the concentration of the denaturing agent(s) may be 0.5-15 %, such as 1-10 %. The denaturing agent(s) preferably has/have one or more, more preferably all, of the following properties: unpleasant smell; disagreeable taste; solubility in ethanol; and compatibility with the ignition improver and the viscosity increasing agent. Further it is benefical if the denaturing agent(s) is/are not harmful to fuel systems and engines and is/are not easily separated from the fuel composition by destillation or other methods.

In embodiments, the denaturing agent(s) may be selected from the group of:
C₁₋₆ alcohols other than ethanol, such as methanol, *n*-propanol, isopropanol and butanol; and
C₁₋₃ alkyl-*tert*-butyleter, such as metyl-*tert*-butyleter (MTBE) and/or etyl-*tert*-butyleter (ETBE).

Thus, in embodiments, the denaturing agent(s) may comprise butanol and metyl-*tert*-butyleter (MTBE) and/or etyl-*tert*-butyleter ETBE.

In the context of the present disclosure, "butanol" refers to any one of the butanol isomers *n*-butanol, *sec*-butanol, isobutanol and *tert*-butanol. Further, "butanol" may also be a mixture of two or more of the butanol isomers.

Thus, in embodiments of the first aspect, the fuel may further comprise one or more denaturing agents, which may for example be selected from those described above.

To further improve the performance and/or durability of an engine running on the fuel, a lubrication agent may be added.

Thus, in embodiments of the first aspect, the fuel may further comprise a lubrication agent. For a given lubrication agent, the skilled person may without undue burden select an appropriate concentration of it.

For example, the concentration of the lubrication agent may be 0.01-1.5 % by weight.

In the embodiments, the fuel may for example have a lubricity value of 460 µm or less according to the high-frequency reciprocating rig (HFRR) test, ISO 12156-1. In some embodiments, the lubricity value may be less than 400 µm. Further, the lubrication agent is preferably soluble in ethanol at -35 °C. Also, as with the denaturing agent, the lubrication agent is preferably not harmful to fuel systems and engines.

Compression engines running on ethanol fuel may be particularly susceptible to corrosion. Thus, in embodiments of the first aspect, the fuel may further comprise a corrosion inhibitor. The inventors have found that morpholin may be a suitable corrosion inhibitor for this purpose. Consequently, in embodiments of the first aspect, the corrosion inhibitor may be morpholin or derivatives thereof.

In further embodiments, the concentration of the corrosion inhibitor may be 5-500 ppm, such as 30-300 ppm, such as 50-150 ppm by weight. These ranges are particularly relevant if the corrosion inhibitor is morpholin.

It may be advantageous if the fuel is distinguishable from other liquids, such as drinkable spirits. Therefore, in embodiments of the first aspect, the fuel may further comprise a colorant. For example, the colorant may be a green colorant or a red colorant. If the fuel comprises a colorant, it should preferably be added in an amount that makes the fuel visually distinguishable from a corresponding ethanol fuel to which no colorant has been added.

As a second aspect of the present disclosure, there is provided a use of a fuel according to the first aspect for running a compression engine. As an example, the compression engine according to the second aspect may comprise unit injectors.

As a third aspect of the present disclosure there is provided a use of a chemical compound having a molecular weight of 100-10000 and comprising a polymeric moiety as a viscosity increasing agent in an ethanol based fuel.

The embodiments of the viscosity increasing agent of the first aspect also apply to the compound of the third aspect. The further embodiments of the first aspect apply to the third aspect *mutatis mutandis*, if applicable.

As a fourth aspect of the present disclosure there is provided a method of producing an ethanol based fuel for a compression engine, comprising the step of:
a) providing an ethanol based solution and
b) adding a viscosity increasing agent to said ethanol based solution to obtain said ethanol based fuel, wherein the viscosity of the ethanol based fuel at 40 °C is at least 10 % higher than that of the ethanol based solution.

The viscosity of the fourth aspect may be the kinematic viscosity or the dynamic viscosity. Preferably, it is the kinematic viscosity (cSt or mm²*s⁻¹), which may be measured according to the standard method ASTM D7042-04.

The viscosity increasing agent of the third aspect may be selected as described above. Thus, the embodiments of the viscosity increasing agent described in connection with the first aspect also apply to the third and fourth aspects.

In the context of the fourth aspect, an ethanol based solution is a solution which comprises a major amount of ethanol liquid, wherein a "major amount" is an amount which is larger by weight than the amount of any other component of the ethanol based solution. Preferably, the ethanol liquid content of the ethanol based solution is at least 50 % by weight, such as at least 75 % by weight. "Ethanol liquid" and various embodiments thereof are described above in connection with the first aspect. For reasons discussed above in connection with the first aspect, the ethanol liquid content of the ethanol based fuel may in embodiments of the fourth aspect be 50 - 99 % by weight, such as 75 - 99 % by weight, such as 80 - 99 % by weight, such as 80 - 99 % by weight, such as 85 - 99 % by weight, such as 90 - 99 % by weight. Also, in embodiments of the fourth aspect, the ethanol liquid contains less than 1.5 % water by weight, such 1.0 % or less water by weight, such that less than 0.5 % water by weight.

In embodiments of the fourth aspect, the viscosity of the ethanol based fuel at 40 °C is at least 15 % higher, such as at least 20 % higher, than that of the ethanol based solution.

As explained above in connection with the first aspect, problems may arise if the viscosity of the fuel is too high. Accordingly, in embodiments of the fourth aspect, the viscosity of the ethanol based fuel at 40 °C is less than 200 % higher, such as less than 150 % higher, than that of the ethanol based solution.

As presented in the examples section below, the viscosity of a diesel fuel is about 34 % higher than that of a traditional ethanol-based fuel associated with the sticky coatings problem. Thus, in embodiments of the fourth aspect, the viscosity of the ethanol based fuel at 40 °C is 20 - 50 % higher, such as 24 - 44 % higher, than that of the ethanol based solution.

The ethanol based fuel according to the fourth aspect may comprise various components, which are described above in connection with the first aspect. For example, the ethanol based solution may comprise an ignition improver. Further, the ignition improver may be added after the addition of the viscosity increasing agent. In one embodiment of the fourth aspect, the viscosity increasing agent and the ignition improver are the same agent. In an alternative embodiment of the fourth aspect, the viscosity increasing agent and the ignition improver are different agents.

For reasons explained above in connection with the first aspect, the concentration of the viscosity increasing agent in the ethanol based fuel may, in embodiments of the fourth aspect, be higher than 0.05 % by weight, such as higher than 0.1 % by weight. Further, in complementary or independent embodiments of the fourth aspect, the concentration of the viscosity increasing agent in the ethanol based fuel may be lower than 10 % by weight, such as lower than 5 % by weight.

Further embodiments of the fuel of the first aspect apply *mutatis mutandis* to the ethanol-based fuel of the fourth aspect.

### Example embodiments

In table 1, the components and viscosities of different fuels (fuel compositions) are presented. The viscosity measurements on fuels 2-8 were performed in-house using a Brookfield viscosimeter of the model LVDV-II+.

The viscosity measurement on fuel 1 was performed by a laboratory company (SAYBOLT SWEDEN AB) using the standard method ASTM D7042-04. The density measurements regarding the same fuel was performed by the same company using the standard method DIN-EN-ISO 12185-96 (40°C) and SS-EN-ISO 12185-96 (20°C).

Fuel 1, which composition is identical to that of fuel 3, is a commercially available ethanol-based fuel for diesel engines. The problem of sticky coatings formation has been experienced in engines running on such a fuel. As seen in the table, the viscosity of such a fuel (measured with the standard method) is 1.40 cSt at 40°C.

The absolute values of the measurements on fuel 1 are more reliable than the absolute values of the in-house measurements. As apparent from the table, in particular if comparing fuel 1 with fuel 3, the values from the in-house measurements are generally higher. Also, a control measurement on water supported that the values obtained with the in-house equipment are too high. Thus, the values of the in-house measurements are mainly presented to be compared with each other, e.g. to demonstrate that the viscosity of a fuel can be increased using a viscosity increasing agent.

| Fuel (#) | Eth 95 % (w%) | Eth 99 % (w%) | MTBE (w%) | *iso*-but (w%) | Ign imp (w%) | Visc 20°C (cP) | Visc 20°C (cst) | Visc 40°C (cP) | Visc 40°C (cst) | Dens 20°C (g/ml) | Dens 40°C (g/ml) |
|---|---|---|---|---|---|---|---|---|---|---|---|
| | | | | | | | | | | | |
| 1. | 92.2 | | 2.3 | 0.5 | 5 | 1.73 | 2.11 | 1.13 | 1.40 | 0.819 | 0.804 |
| 2. | 97.7 | | 2.3 | 0.5 | | 1.92 | 2.39 | 1.65 | - | 0.806 | - |
| 3. | 92.2 | | 2.3 | 0.5 | 5 | 2.15 | 2.62 | 1.81 | - | 0.819 | - |
| 4. | 87.7 | | 2.3 | 0.5 | 10 | 2.47 | 2.97 | 2.02 | - | 0.831 | - |
| 5. | | 97.7 | 2.3 | 0.5 | | 1.72 | 2.17 | 1.55 | - | 0.791 | - |
| 6. | | 92.2 | 2.3 | 0.5 | 5 | 1.88 | 2.34 | 1.66 | - | 0.802 | - |
| 7. | | 87.7 | 2.3 | 0.5 | 10 | 2.23 | 2.73 | 1.92 | - | 0.818 | - |
| 8. | | | Diesel | | | 2.85 | 3.51 | 2.42 | - | 0.811 | - |

Table 1 presents the results of viscosity measurements of different fuel compositions. "Eth 95 %" and "Eth 99 %" refer to ethanol liquid containing 95 % and 99 % ethanol, respectively. "iso-but" refers to iso-butanol. "Ign imp" refers to an ignition improver, containing a polymeric moiety, according to WO 95/05437. "w%" refers to weight percentage of the fuel. "Visc" refers to viscosity. "Dens" refers to density. Each measurement on fuels 2-8 was performed three times, and the presented values are average values.

From table 1 it is apparent that the addition of the ignition improver, which has a molecular weight in the range of 450-5000 and contains a polymeric moiety, increases the viscosity of the fuel. Regarding the fuels containing hydrous ethanol, it is noted that the viscosity of fuel 3 is higher than that of fuel 2 and further, that the viscosity of fuel 4 is higher that that of fuel 2 or 3. Regarding the fuels containing anhydrous ethanol, it is noted that the viscosity of fuel 6 is higher than that of fuel 5 and further, that the viscosity of fuel 7 is higher than that of fuel 6 or 7. In general, an addition on 5 weight percentage of ignition improver results in a viscosity increase of about 10 %. However, the inventors predict other viscosity increasing agents, which contain a polymeric moiety but are different from the ignition improver, may increase the viscosity of ethanol-based fuels to a higher degree. It is within the capabilities of the skilled person to select such viscosity increasing agents, and he may do so without undue burden.

Fuel 8 is a diesel fuel (OKQ8 Diesel B5) bought at a gas station (OKQ8). OKQ8 Diesel B5 is a mixture of Diesel MK1 and 5 % of "rapsmetylester" (RME, a fatty acid methyl ester). As seen in the table, the dynamic viscosity (cP) of the diesel fuel (fuel 8) is about 34 % higher at 40°C than that of the commercial ethanol-based fuel (fuel 3). At 40°C, the densities of fuel 3 and fuel 8 do not differ much, and the relation between the kinematic viscosities (cSt) is therefore similar.

## Claims

1. Fuel for a compression engine comprising a major amount of an ethanol liquid and minor amounts of an ignition improver and a viscosity increasing agent, wherein the viscosity of the fuel is 1.6 - 4.5 cSt at 40 °C and the ignition improver and the viscosity increasing agent are the same or different.

2. Fuel according to claim 1, wherein the ethanol liquid contains less than 1.5 % water by weight.

3. Fuel according to claim 2, wherein the ethanol liquid contains less than 1.0 % water by weight or less.

4. Fuel according to any one of the preceding claims, wherein the viscosity of the fuel is 1.8 - 4.0 cSt at 40 °C.

5. Fuel according to any one of the preceding claims, wherein the viscosity of the fuel is 1.9 - 3.5 cSt at 40 °C.

6. Fuel according to any one of the preceding claims, wherein the viscosity increasing agent is soluble in the ethanol liquid.

7. Fuel according to any one of the preceding claims, wherein the viscosity increasing agent has a molecular weight of 100-10000 and comprises a polymeric moiety.

8. Fuel according to any one of the preceding claims, wherein the concentration of the viscosity increasing agent is higher than 0.05 % by weight.

9. Fuel according to any one of the preceding claims, wherein the ignition improver content is 1-10 % by weight.

10. Fuel according to any one of the preceding claims, wherein the ethanol liquid content is 75 - 99 % by weight.

11. Fuel according to claim 10, wherein the ethanol liquid content is 85 - 99 % by weight.

12. Fuel according to any one of the preceding claims, further comprising a lubrication agent.

13. Use of a fuel according to anyone of the preceding claims for running a compression engine.

14. Use of a chemical compound having a molecular weight of 100-10000 and comprising a polymeric moiety as a viscosity increasing agent in an ethanol based fuel.

15. Method of producing an ethanol based fuel for a compression engine, comprising the step of:
a) providing an ethanol based solution and
b) adding a viscosity increasing agent to said ethanol based solution to obtain said ethanol based fuel, wherein the viscosity of the ethanol based fuel at 40 °C is at least 10 % higher than that of the ethanol based solution.
